# EUROPEAN PATENT SPECIFICATION

(11) **EP 0 443 849 B1**
(45) Date of publication and mention of the grant of the patent: **04.08.1993**
(21) Application number: 91301378.5
(22) Date of filing: 21.02.1991
(51) Int. Cl.: A21C 11/16

(54) **Marble-pattern filling delivery apparatus**
Abgabevorrichtung für eine marmorähnliche Füllmasse
Appareil pour la distribution d'une pâte à fourer imitant le marbre

(30) Priority: 21.02.1990 JP 15599/90
(43) Date of publication of application: 28.08.1991
(73) Proprietor: RHEON AUTOMATIC MACHINERY CO. LTD., Utsunomiya-shi Tochigi-ken (JP)
(72) Inventor: Aoki, Shigeru, Utsunomiya-shi, Tochigi-ken (JP); Hiraide, Motoi, Utsunomiya-shi, Tochigi-ken (JP)
(74) Representative: Boyes, Kenneth Aubrey

(56) References cited:
- EP-A- 0 102 232
- EP-A- 0 127 715
- FR-A- 847 554
- US-A- 3 415 206

## Description

This invention relates to an apparatus for delivering a marble-pattern edible filling e.g. onto a sponge cake. This apparatus can also be advantageously used to manufacture a sandwich-like confectionery, a cake, or the like.

An apparatus for delivering a plurality of filling materials in various patterns is known from FR-A-847,554. The features known in combination from this document are shown in the preamble portions of claims 1 and 4.

The object of this invention is to provide an apparatus of a simple structure that can easily deliver a plurality of filling materials in a marble pattern.

According to one aspect of the present invention, there is provided a marble-pattern edible filling delivery apparatus comprising a plurality of supply pipes for supplying a plurality of filling materials, and a hollow cylindrical body with a plurality of openings, each separately communicating with one of said plurality of supply pipes, characterised in that, said cylindrical body being provided with a screw therein for feeding the filling materials.

By this invention, a plurality of edible filling materials, for example, cream and jam, may be supplied by separate supply pipes, and the filling materials thus combined in the hollow cylinder, and, when the combined filling materials are fed by the screw in the cylinder, a marble-pattern filling is formed. The marble-pattern edible filling thus formed may be delivered from the cylinder onto a half piece of confectionery material.

Further, another aspect of this invention provides a marble-pattern edible filling delivery apparatus comprising a plurality of supply pipes for supplyng a plurality of filling materials, means for feeding the filling materials through said plurality of supply pipes, a hollow cylindrical body with a plurality of openings, each of which communicates with each of said plurality of supply pipes, and with a constricted orifice formed at the lower end thereof, characterised in that, each of said cylindrical body openings communicates with one of said plurality of supply pipes at the upper part of said cylindrical body, and said cylindrical body containing in an upper part thereof a screw for feeding the filling material downward, said screw being provided with a stem extending from the lower end thereof, a cutter located at said lower end of said cylindrical body for cutting the filling material discharged from said lower end, and a vertically and horizontally movable conveying member extending under said cutter.

Since the density of the marble-pattern filling varies depending on the materials, the internal pressure of the filling may not be uniform, such that the filling thus formed is not uniform, and the marble-pattern filling, when delivered in such a condition, is warped and will not be accurately and neatly placed on the confectionery material. The stem and the constricted orifice cooperate to prevent such a problem. Namely, the stem and the constricted orifice substantially equalize the internal pressure of the marble-pattern filling. Thus, the marble-pattern filling can be discharged in a solid cylindrical form.

Also, the constricted orifice functions to prevent the filling materials from dropping from the cylinder. Namely, when the marble-pattern filling filled in the cylinder remains stationary in the cylinder, it tends to drop due to gravity and to form a cavity or void in the cylinder. This affects the otherwise smooth delivery of the filling. The constricted orifice in the lower delivery end of the cylinder resolves this problem by preventing the filling from an undesirable dropping.

The stem also functions to prevent an undesirable swinging of the filling when discharged due to the cutting force generated by the cutter located at the lower delivery end of the cylinder.

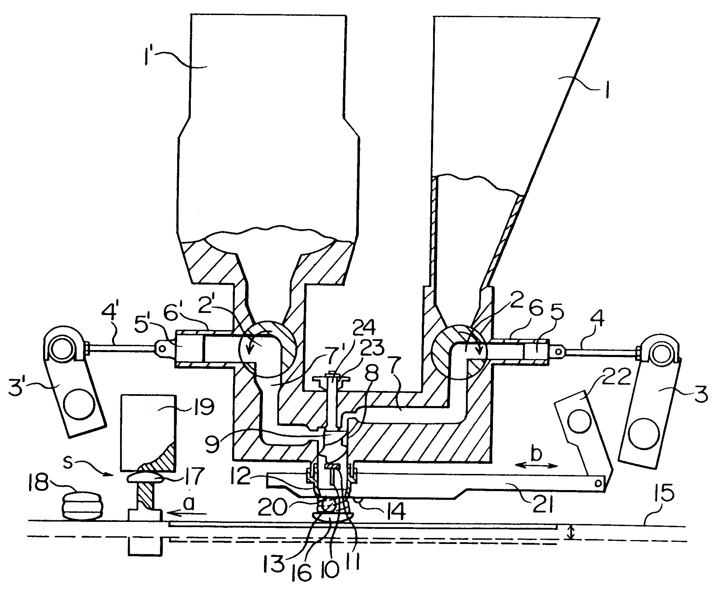

There will now be described, by way of example only, a preferred embodiment of the present invention with reference to the sole drawing which is a partly sectional side elevational view of the apparatus of the present invention.

An embodiment of this invention will now be described by reference to the drawing. It shows a marble-pattern edible filling delivery apparatus in which two filling materials, for example, jam and cream, are used. A hopper (1) for the jam is connected to a filling material (jam) supply pipe (7) through a rotary valve (2) and a cylinder (6) having a piston (5) driven by the combined action of a crank (3) and an arm (4). The crank is connected to a piston driving system, not shown. Similarly, a hopper (1′) for the cream is connected to a filling material (cream) supply pipe (7′) through a rotary valve (2′) and a cylinder (6′) having a piston (5′) driven by the combined action of a crank (3′) and an arm (4′). This crank is also corrected to another piston driving system, not shown.

Thus, the pistons (5) and (5′) can be separately controlled, so that the ratio of the filling materials to be blended (the jam and the cream) can be adjusted as desired. Namely, the stroke of the pistons 5 and 5′ can be changed by adjusting each of the piston drive systems. By this adjustment, the quantity of the plurality of filling materials can be changed to obtain a desirable filling.

The filling material supply pipes (7) and (7′) separately communicate with the inner portion of the upper part of a hollow mixing cylinder (8). The ends of the filling material supply pipes (7) and (7′), which are connected to the hollow cylinder (8), have reduced diameters. Thus a marble-pattern consisting of slender or fine fluxes can be obtained at an increased speed.

A screw (9) is rotatably supported in the cylinder (8) by a screw holder (11). The screw is rotated by a motor (not shown) via a chain (not shown) that is entrained around a sprocket (23) fixed to the upper end of a screw shaft (24). The screw holder is in the form of a disc having a hole in the center and two apertures in circumferential directions of the disc, and is supported around its periphery by the upper edge of a constricted end ring (12).

A stem (10) extends from the lower end of the screw through the central hole of the screw holder (11) into the inner space of the constricted end ring (12).

The constricted end ring (12) has a constricted orifice (20) at its lower end and is detachably mounted to the lower end of the cylinder. Since the end ring is detachably connected to the lower end of the cylinder and the screw holder can be removed by detaching the end ring, the inner space of the cylinder can be easily cleaned.

In place of using such an end ring, the lower part of the cylinder may be modified as follows:

The lower extension of the cylinder to which the end ring is corrected is abbreviated and the periphery of the screw holder is welded to the periphery of the lower aperture of the cylinder. After the screw holder is thus welded, a converging hollow cylindrical member, which is similar to the end ring (12), is welded to the lower periphery of the screw holder.

A wire cutter (14) is located at the lower end of the end ring (12) so as to cut the delivered marble-pattern filling (13) into small portions of a predetermined size. A vertically and horizontally movable conveying member, i.e., a conveyor belt (15), extends under the wire cutter (14). When the belt (15) is moved to its upper limit as shown by the solid line in the drawing, the marble-pattern edible filling (13) is discharged from the constricted orifice (20) onto a lower half piece (16) of the confectionery material, which is being conveyed at a constant speed by the belt (15). The filling material and the apparatus that discharges the filling material move in synchronism with the belt (15), in the downstream direction, by means of a bar (21), that is connected to a crank (22). The crank is connected to a driving system, not shown. After the filling material (13) is placed on the confectionery half piece (16), the material is cut into a small portion of a predetermined size by the wire cutter (14). After the filling is cut, the belt (15) is vertically moved to its lower limit as shown by the dotted lines. The filling placed on the lower confectionery half piece (16) is thus moved away from the cutter. Although the cutter (14) is explained in this embodiment as one using a wire, any other suitable cutter can be used instead of it. Also, although a belt (15) is illustrated in the drawing as a member for conveying the pieces of confectionery materials (16), any other suitable conveying member may be used.

The filling material supplied from the hopper (1), and the filling material supplied from the hopper (1′), are charged through the rotary valves (2) and (2′) into the cylinders (6) and (6′) by the pistons (5) and (5′), respectively. The jam and the cream are then fed under pressure into the upper part of the hollow mixing cylinder (8) through the respective supply pipes (7) and (7′). The jam and the cream are joined together in the upper part of the cylinder (8). The jam is combined in a spiral form with the cream by the action of the screw (9), and the resultant marble-pattern filling (13) passes through the apertures formed in the screw holder (11) to be discharged from the end ring (12).

After the filling is cut by the cutter (14), the belt (15) is moved to its lower limit, as shown by the dotted lines, and advances in the direction of the arrow a toward an upper half piece dropping station S, where an upper half piece (17) of the confectionery material is dropped onto the filling (13) by an upper half piece dropping device (19), to provide a final product (18). The delivery apparatus, after the filling is cut, returns to its original position in preparation for the next operating cycle. Namely, the apparatus reciprocates as shown by an arrow b.

By this invention, a marble-pattern edible filling consisting of a pluratity of filling materials can be easily formed and delivered by an apparatus of a simple structure. Therefore, new products having a variety of appearances and tastes can be automatically manufactured.

## Claims

1. A marble-pattern edible filling delivery apparatus comprising a plurality of supply pipes (7,7') for supplying a plurality of filling materials, and a hollow cylindrical body (8) with a plurality of openings, each separately communicating with one of said plurality of supply pipes (7,7'), characterised in that, said cylindrical body (8) being provided with a screw (9) therein for feeding the filling materials.

2. An apparatus as claimed in claim 1 further comprising a stem (10) extending from the feed end of the screw (9).

3. An apparatus as claimed in claim 1 or 2 further comprising a constricted orifice (20) formed at the delivery end of the cylindrical body (8).

4. A marble-pattern edible filling delivery apparatus comprising a plurality of supply pipes (7,7') for supplyng a plurality of filling materials, means for (3-6) feeding the filling materials through said plurality of supply pipes (7,7'), a hollow cylindrical body (8) with a plurality of openings, each of which communicates with one of said plurality of supply pipes (7,7'), and with a constricted orifice (20) formed at the lower end thereof, characterised in that, each of said cylindrical body openings communicates with one of said plurality of supply pipes at the upper part of said cylindrical body (8), and said cylindrical body (8) containing in an upper part thereof a screw (9) for feeding the filling material downward, said screw (9) being provided with a stem (10) extending from the lower end thereof, a cutter (14) located at said lower end of said cylindrical body (8) for cutting the filling material discharged from said lower end, and a vertically and horizontally movable conveying member (15) extending under said cutter (14).

5. A marble-pattern edible filling delivery apparatus as claimed in any preceding claim, wherein the opening of the downstream end of each of said supply pipes (7,7') has a reduced diameter.

## Patentansprüche

1. Vorrichtung zum Abgeben einer eßbaren marmorierten bzw. marmorähnlichen Füllung, umfassend eine Mehrzahl von Zuführrohren (7, 7') zum Zuführen einer Mehrzahl von Füllmaterialien, und einen hohlen zylindrischen Körper (8) mit einer Mehrzahl von Öffnungen, deren jede mit einem der Mehrzahl von Zuführrohren (7, 7') getrennt in Verbindung steht,
dadurch gekennzeichnet,
daß in dem zylindrischen Körper (8) eine Schnecke (9) zum Vorbewegen der Füllmaterialien vorgesehen ist.

2. Vorrichtung nach Anspruch 1, weiter umfassend einen Schaft oder Stößel (10), der sich vom Vorbewegungsende der Schnecke (9) erstreckt.

3. Vorrichtung nach Anspruch 1 oder 2, weiter umfassend eine verengte Öffnung (20), die am Abgabeende des zylindrischen Körpers (8) gebildet ist.

4. Vorrichtung zum Abgeben einer eßbaren marmorierten bzw. marmorähnlichen Füllung, umfassend eine Mehrzahl von Zuführrohren (7, 7') zum Zuführen einer Mehrzahl von Füllmaterialien, eine Einrichtung (3 bis 6) zum Vorbewegen der Füllmaterialien durch die Mehrzahl von Zuführrohren (7, 7'), einen hohlen zylindrischen Körper (8) mit einer Mehrzahl von Öffnungen, deren jede mit einem der Mehrzahl von Zuführrohren (7, 7') und mit einer verengten Öffnung (20) in Verbindung steht, die an dem unteren Ende des Körpers (8) gebildet ist,
dadurch gekennzeichnet,
daß jede der Öffnungen des zylindrischen Körpers mit einem der Mehrzahl von Zuführrohren an dem oberen Teil des zylindrischen Körpers (8) in Verbindung steht, der zylindrische Körper (8) in einem oberen Teil von ihm eine Schnecke (9) enthält zum Vorbewegen des Füllmaterials in Abwärtsrichtung, wobei die Schnecke (9) mit einem Schaft oder Stößel (10) versehen ist, der sich von ihrem unteren Ende erstreckt, ein Schneidorgan (14) an dem unteren Ende des zylindrischen Körpers (8) angeordnet ist, um das von dem unteren Ende abgegebene Füllmaterial abzuschneiden, und daß ein vertikal und horizontal bewegbarer Förderteil (15) vorgesehen ist, der sich unter dem/das Schneidorgan (14) erstreckt.

5. Vorrichtung zum Abgeben einer eßbaren marmorierten oder marmorähnlichen Füllung nach irgendeinem vorhergehenden Anspruch, wobei die Öffnung des stromabwärtigen Endes jedes der Zuführrohre (7, 7') einen verringerten Durchmesser hat.

## Revendications

1. Appareil à distribuer des garnitures comestibles de configuration marbrée, comportant plusieurs conduits (7, 7') d'alimentation destinés à amener plusieurs matières de garniture, et un corps cylindrique creux (8) présentant plusieurs ouvertures communiquant chacune séparément avec l'un desdits conduits (7, 7') d'alimentation, caractérisé en ce que ledit corps cylindrique (8) renferme une vis (9) pour faire avancer les matières de garniture.

2. Appareil selon la revendication 1, comportant en outre une tige (10) dépassant de l'extrémité d'avance de la vis (9).

3. Appareil selon la revendication 1 ou 2, comportant en outre un orifice étranglé (20) formé à l'extrémité de distribution du corps cylindrique (8).

4. Appareil à distribuer des garnitures comestibles de configuration marbrée, comportant plusieurs conduits (7, 7') d'alimentation destinés à l'alimentation en plusieurs matières de garniture, des moyens (3-6) destinés à faire avancer les matières de garniture dans lesdits conduits (7, 7') d'alimentation, un corps cylindrique creux (8) présentant plusieurs ouvertures communiquant chacune avec l'un desdits conduits (7, 7') d'alimentation et avec un orifice étranglé (20) formé à son extrémité inférieure, caractérisé en ce que chacune desdites ouvertures du corps cylindrique communique avec l'un desdits conduits d'alimentation à la partie supérieure dudit corps cylindrique (8), ledit corps cylindrique (8) contenant, dans une partie supérieure de celui-ci, une vis (9) destinée à faire avancer la matière de garniture vers le bas, ladite vis (9) étant pourvue d'une tige (10) dépassant de son extrémité inférieure, un dispositif de coupe (14) étant placé à ladite extrémité inférieure dudit corps cylindrique (8) pour couper la matière de garniture déchargée de ladite extrémité inférieure, et un élément transporteur (15), mobile verticalement et horizontalement, s'étendant au-dessous dudit dispositif de coupe (14).

5. Appareil à distribuer des garnitures comestibles de configuration marbrée selon l'une quelconque des revendications précédentes, dans lequel l'ouverture de l'extrémité d'aval de chacun desdits conduits (7, 7') d'alimentation présente un diamètre réduit.
